# EUROPÄISCHE PATENTSCHRIFT

(11) **EP 2 877 375 B1**
(45) Veröffentlichungstag und Bekanntmachung des Hinweises auf die Patenterteilung: **31.05.2017**
(21) Anmeldenummer: 13742422.2
(22) Anmeldetag: 23.07.2013
(51) Int. Cl.: B60R 19/48, G10K 9/122, G10K 9/22

(54) **VERFAHREN ZUM HERSTELLEN EINES ULTRASCHALLSENSORS FÜR EIN KRAFTFAHRZEUG, ULTRASCHALLSENSOR UND KRAFTFAHRZEUG**
METHOD FOR PRODUCING AN ULTRASONIC SENSOR FOR A MOTOR VEHICLE, ULTRASONIC SENSOR, AND MOTOR VEHICLE
PROCÉDÉ DE FABRICATION D'UN CAPTEUR À ULTRASONS POUR UN VÉHICULE AUTOMOBILE, CAPTEUR À ULTRASONS ET VÉHICULE AUTOMOBILE

(30) Priorität: 27.07.2012 DE 102012014932
(43) Veröffentlichungstag der Anmeldung: 03.06.2015
(73) Patentinhaber: Valeo Schalter und Sensoren GmbH, 74321 Bietigheim-Bissingen (DE)
(72) Erfinder: KUPFERNAGEL, Uwe, 71665 Vaihingen an der Enz (DE)
(86) Internationale Anmeldenummer: PCT/EP2013/065475
(87) Internationale Veröffentlichungsnummer: WO 2014/016276

(56) Entgegenhaltungen:
- DE-A1- 10 125 272
- DE-A1-102006 028 214
- DE-A1-102008 055 126
- DE-A1-102008 062 011
- US-A1- 2002 130 770

## Beschreibung

Die Erfindung betrifft ein Verfahren zum Herstellen eines Ultraschallsensors für ein Kraftfahrzeug durch Bereitstellen eines Sensorgehäuses, einer Membran zum Aussenden und/oder Empfangen von Ultraschallsignalen, wie auch eines Entkopplungselements, welches zur schwingungstechnischen Entkopplung der Membran von dem Sensorgehäuse zwischen dem Sensorgehäuse und der Membran angeordnet wird. Die Erfindung betrifft außerdem einen Ultraschallsensor, wie auch ein Kraftfahrzeug mit einem solchen Sensor.

Ultraschallsensoren für Kraftfahrzeuge sind bereits Stand der Technik. Sie sind üblicherweise Bestandteil einer so genannten Einparkhilfe, welche zum Unterstützen des Fahrers beim Durchführen von Manövern mit dem Kraftfahrzeug dient, nämlich insbesondere beim Einparken in eine Parklücke bzw. beim Ausparken aus der Parklücke. In der Regel werden eine Vielzahl von solchen Ultraschallsensoren verwendet, die an dem vorderen bzw. an dem hinteren Stoßfänger des Kraftfahrzeugs in Fahrzeugquerrichtung verteilt angeordnet sind.

Ein Ultraschallsensor dient zum Messen des Abstands zwischen dem Kraftfahrzeug einerseits und einem in seiner Umgebung befindlichen Hindernis andererseits. Zu diesem Zwecke wird ein Ultraschallsignal mithilfe einer Membran ausgesendet, welche hierzu mittels eines Piezoelements zu einer mechanischen Schwingung angeregt wird. Das ausgesendete Ultraschallsignal reflektiert dann an dem Hindernis und gelangt dann als Echo wieder zum Ultraschallsensor. Das Echo regt die Membran noch einmal zu einer mechanischen Schwingung an, wodurch auch eine elektrische Spannung an dem Piezoelement induziert und mittels einer elektronischen Steuereinrichtung abgegriffen wird. Der Abstand wird dann in Abhängigkeit von der Laufzeit des Ultraschallsignals bestimmt.

Nun richtet sich das Interesse auf das Herstellen eines Ultraschallsensors bzw. auf die Ausgestaltung des Ultraschallsensors. Zur schwingungstechnischen Entkopplung der Membran von dem Sensorgehäuse wird üblicherweise ein so genanntes Entkopplungselement eingesetzt, welches beispielsweise aus einem weichelastischen Entkopplungselement eingesetzt, welches beispielsweise aus einem weichelastischen Material gebildet ist. Dieses Entkopplungselement hat dann die Aufgabe, das aus Kunststoff gebildete Sensorgehäuse von der mechanischen Schwingung der Membran zu entkoppeln. Ein solches Entkopplungselement ist beispielsweise aus dem Dokument DE 10 2006 028 214 A1 bekannt. Dieses Entkopplungselement ist zwischen der Membran einerseits und dem Sensorgehäuse andererseits angeordnet und hat die Funktion, die Membran im Gehäuse zu halten und die Übertragung der Membranschwingungen auf das Gehäuse zu reduzieren. Das ringförmige Entkopplungselement ist hier über Rastmittel mit dem Sensorgehäuse verbunden.

Ein Verfahren zum Herstellen eines Ultraschallsensors der eingangs genannten Gattung ist aus der Druckschrift DE 101 25 272 A1 bekannt. Zur Herstellung des Entkopplungselements wird dabei ein flüssiges Medium in einen Zwischenraum zwischen der Membran und dem Sensorgehäuse eingespritzt oder eingegossen.

Aus der DE 10 2008 055 126 A1 ist ein Ultraschallwandler zum Einsatz in fluiden Medien mit einem topförmigen Membrankörper bekannt, der an seiner Innenseite mit einem weichelastischen Entkopplungselement ausgekleidet ist.

Aus der DE 101 25 272 A1 sind ein Ultraschallsensor und ein Verfahren zur Herstellung eines Ultraschallsensors bekannt, bei dem ein Entkopplungsmedium aus weichelastischem Material bei der Herstellung in einen Zwischenraum zwischen Sensorgehäuse und topfförmigem Membrankörper gegossen wird.

Aus der DE 10 2008 062 011 A1 ist ein gattungsgemäßer Ultraschallsensor mit einem Sensorgehäuse und einem separat zum Sensorgehäuse ausgebildeten und mit dem Sensorgehäuse stoffschlüssig verbundenen Befestigungsrahmen bekannt, wobei der Befestigungsrahmen Rastmittel zur Befestigung des Sensor in einer Aufnahme an einem Fahrzeug aufweist. Der Befestigungsrahmen begrenzt eine kreisförmige Durchtrittsöffnung für eine Membran des Ultraschallsensors, wobei am Öffnungrand der Durchtrittsöffnung ein Entkopplungsring aus weichelastischem Material in einem 2-Komponenen-Verfahren angeformt sein kann.

Es ist Aufgabe der Erfindung, eine Lösung aufzuzeigen, wie die Herstellung eines Ultraschallsensors im Vergleich zum Stand der Technik weiterhin vereinfacht werden kann.

Diese Aufgabe wird erfindungsgemäß durch ein Verfahren, durch einen Ultraschallsensor sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren zum Herstellen eines Ultraschallsensors für ein Kraftfahrzeug werden zunächst folgende Komponenten bereitgestellt: ein Sensorgehäuse, eine Membran sowie ein Entkopplungselement. Das Entkopplungselement wird zwischen dem Sensorgehäuse und der Membran angeordnet. Erfindungsgemäß ist vorgesehen, dass das Entkopplungselement auf eine innenseitige Fläche des Sensorgehäuses aufgespritzt wird und anschließend die Membran in das Sensorgehäuse eingesetzt wird. Somit ist die Herstellung des Ultraschallsensors besonders einfach, weil sich ein zusätzlicher Montageschritt bei der Montage des Ultraschallsensors erübrigt, nämlich der Schritt der Montage des Entkopplungselements. Dieses Entkopplungselement ist nämlich bereits auf der Innenseite des Sensorgehäuses aufgespritzt, sodass sich die Montage des Ultraschallsensors lediglich im Wesentlichen auf das Einsetzen der Membran und gegebenenfalls auch einer Platine in das Sensorgehäuse beschränkt. Insgesamt müssen auch weniger Einzelteile bereitgestellt und gehandelt werden, und es werden außerdem die Montagetoleranzen auf ein Minimum reduziert.

Erfindungsgemäß wird das Sensorgehäuse aus zwei voneinander separaten Gehäuseschalen gebildet. Diese Gehäuseschalen stellen vorzugsweise zwei Gehäusehälften dar, welche insgesamt ein hohles und zylinderförmiges Sensorgehäuse bilden. Die beiden Gehäuseschalen stellen dabei bevorzugt jeweils einen 180°-Sektor des zylindrischen Sensorgehäuses dar. Dies bedeutet, dass das Sensorgehäuse insbesondere entlang einer Trennebene in die beiden Gehäuseschalen unterteilt ist, welche parallel zu einer Längsachse des zylindrischen Sensorgehäuses verläuft.

Also wird das Sensorgehäuse aus zwei voneinander separaten Gehäuseschalen gebildet. Bei dieser Ausführungsform ist somit auch das Entkopplungselement aus zwei separaten Teilen gebildet, indem auf die jeweiligen innenseitigen Flächen der beiden Gehäuseschalen jeweils ein Teil des Entkopplungselements aufgespritzt wird. Somit ist die Montage des Ultraschallsensors ohne viel Aufwand möglich. Es reicht nämlich lediglich, dass die Membran zwischen die beiden Gehäuseschalen eingesetzt und dort durch Verbinden der beiden Gehäuseschalen eingeklemmt wird.

In einer Ausführungsform umfasst das Einsetzen der Membran in das Sensorgehäuse, dass die Membran zunächst in die eine Gehäuseschale eingesetzt wird und anschließend die beiden Gehäuseschalen miteinander verbunden werden, sodass die Membran zwischen den beiden Teilen des Entkopplungselements eingeklemmt wird. Einerseits ist die Montage des Ultraschallsensors somit besonders einfach; andererseits kann somit auch die Membran zwischen den beiden Gehäuseschalen besonders zuverlässig und rutschfest gehalten werden. Insbesondere kann hier vorgesehen sein, dass ein sich in radialer Richtung erstreckender Flansch der Membran unter einem rechten Winkel zur innenseitigen Fläche des Sensorgehäuses in die eine Gehäuseschale eingesetzt und dann von der anderen Seite durch die andere Gehäuseschale verdeckt und somit insgesamt zwischen die beiden Gehäuseschalen geklemmt wird. Ein Schwingungsbereich der Membran kann dabei außerhalb des Sensorgehäuses liegen, nämlich über eine axiale, stirnseitige Öffnung des Sensorgehäuses aus diesem herausragen.

Es erweist sich als vorteilhaft, wenn die beiden Gehäuseschalen über Rastmittel miteinander verbunden werden. Einerseits ist die Verbindung der beiden Gehäuseschalen besonders betriebssicher; andererseits kann eine solche Verbindung auch besonders rasch realisiert werden, indem beispielsweise die eine Gehäuseschale gegen die andere Gehäuseschale gedrückt und eine Rastnase in eine korrespondierende Rastöffnung einrastet.

Es kann vorgesehen sein, dass durch die Verbindung der beiden Gehäuseschalen die Membran zwischen den beiderseitigen Teilen des Entkopplungselements formschlüssig und/oder kraftschlüssig im Sensorgehäuse festgelegt wird. Somit kann ein zuverlässiger und fester Sitz der Membran in dem Sensorgehäuse gewährleistet werden, sodass ein Lösen der Membran von dem Sensorgehäuse verhindert wird.

Zur Abdichtung der Verbindungsstelle zwischen den beiden Gehäuseschalen kann zumindest eines der Teile des Entkopplungselements eine entsprechende Dichtung aufweisen. Dies kann beispielsweise so aussehen, dass das eine Teil des Entkopplungselements im Bereich der Verbindungsstelle eine Nut bzw. Aussparung aufweist, in welche ein korrespondierender Dichtungsgrat des anderen Teils des Entkopplungselements beim Verbinden der beiden Gehäuseschalen aufgenommen wird. Durch Verbinden der Gehäuseschalen werden somit die beiden Teile des Entkopplungselements gegeneinander gedrückt, und der Dichtungsgrat gelangt dann in die korrespondierende Aussparung des anderen Teils des Entkopplungselements, wodurch das gesamte Sensorgehäuse nach außen hin abgedichtet wird. Somit ist der gesamte Ultraschallsensor gegen Umwelteinflüsse besonders sicher geschützt.

Also kann das Entkopplungselement mit einem Haltebereich zum kraftschlüssigen und/oder formschlüssigen Halten der Membran ausgebildet werden. Dieser Haltebereich kann mit einer umlaufenden radialen Nut ausgebildet werden, in welche ein radialer Randbereich der Membran - und insbesondere des oben genannten radialen Flansches - zur Herstellung des Formschlusses und/oder des Kraftschlusses aufgenommen wird. Durch eine derartige umlaufende Nut wird erreicht, dass die Membran in axialer Richtung in dem Sensorgehäuse zuverlässig fixiert ist und außerdem das gesamte Sensorgehäuse an dieser Stelle auch wirkungsvoll nach außen hin abgedichtet ist.

Das Entkopplungselement kann aber auch einen zweiten Haltebereich aufweisen, welcher zum Halten einer Leiterplatte - mit daran angeordneten elektronischen Elementen - ausgebildet ist. Dieser zweite Haltebereich kann gegenüber dem ersten Haltebereich zum Halten der Membran axial versetzt angeordnet sein, sodass die Leiterplatte in axialer Richtung neben der Membran angeordnet werden kann. Somit wird ein multifunktionelles Entkopplungselement bereitgestellt, welches neben der schwingungstechnischen Entkopplung sowie neben der Funktion des Haltens der Membran auch zusätzlich noch die Funktion der Halterung der Leiterplatte aufweist. Somit ist auch die Leiterplatte in einem zuverlässig abgedichteten Bereich angeordnet, und es kann außerdem die Übertragung der mechanischen Schwingung auf diese Leiterplatte verhindert werden. Die Halterung der Leiterplatte kann so erfolgen, dass diese im Wesentlichen parallel zur Längsachse des zylindrischen Sensorgehäuses angeordnet wird, sodass die Leiterplatte in einer Trennebene zwischen den beiden Gehäuseschalen liegt und einerseits durch die eine Gehäuseschale sowie andererseits durch die andere Gehäuseschale abgedeckt ist.

Ein erfindungsgemäßer Ultraschallsensor für ein Kraftfahrzeug umfasst ein Sensorgehäuse, eine Membran sowie ein Entkopplungselement, das zwischen dem Sensorgehäuse und der Membran angeordnet ist. Das Entkopplungselement ist an einer innenseitigen Fläche des Sensorgehäuses als Spritzgussteil angespritzt, und das Sensorgehäuse weist zwei voneinander separate Gehäuseschalen auf, zwischen welchen die Membran eingeklemmt ist.

Ein erfindungsgemäßes Kraftfahrzeug umfasst einen erfindungsgemäßen Ultraschallsensor.

Die mit Bezug auf das erfindungsgemäße Verfahren vorgestellten bevorzugten Ausführungsformen und deren Vorteile gelten entsprechend für den erfindungsgemäßen Ultraschallsensor sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert. Es sei betont, dass das nachfolgend beschriebene Ausführungsbeispiel eine bevorzugte Ausführungsform der Erfindung darstellt und die Erfindung somit nicht auf diese beispielhafte Ausführungsform beschränkt ist.

Es zeigen:
- Fig. 1: in schematischer und perspektivischer Darstellung einen Ultraschallsensor gemäß einer Ausführungsform der Erfindung;
- Fig. 2 bis 4: in schematischer und perspektivischer Darstellung unterschiedliche Komponenten des Ultraschallsensors gemäß Fig. 1; und
- Fig. 5 bis 7: in schematischer und perspektivischer Darstellung einen Montageprozess des Ultraschallsensors.

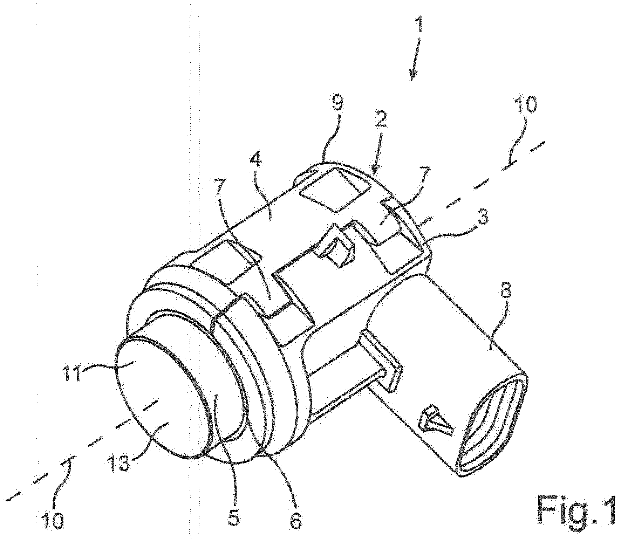

In Fig. 1 ist in schematischer und perspektivischer Darstellung ein Ultraschallsensor 1 gemäß einer Ausführungsform der Erfindung näher dargestellt. Der Ultraschallsensor 1 hat ein Sensorgehäuse 2, welches im Ausführungsbeispiel aus zwei Gehäuseschalen 3, 4 besteht. In dem Sensorgehäuse 2 ist eine Membran 5 gehalten, welche in dem Sensorgehäuse 2 mithilfe eines Entkopplungselements 6 befestigt ist. Das Entkopplungselement 6 hat auch die Funktion, das Sensorgehäuse 2 schwingungstechnisch von der Membran 5 zu entkoppeln.

Die beiden Gehäuseschalen 3, 4 sind über Rastmittel 7 miteinander verbunden. Das Sensorgehäuse 2 hat einen Anschlussbereich 8, über welchen der Ultraschallsensor 1 an eine elektronische Steuereinrichtung eines Kraftfahrzeugs elektrisch angeschlossen werden kann. Neben dem Anschlussbereich 8 weist das Sensorgehäuse 2 einen zylindrischen Bereich 9 auf, wobei die beiden Gehäuseschalen 3, 4 im Wesentlichen zwei 180°-Zylindersektoren darstellen. Eine Trennung zwischen den beiden Gehäuseschalen 3, 4 erfolgt also entlang einer Ebene, die parallel zu einer Längsachse 10 des zylindrischen Bereichs 9 des Sensorgehäuses 2 verläuft, wobei diese Längsachse 10 auch in der genannten Trennebene liegen kann. Somit sind die beiden, entlang der Längsachse 10 geteilten Gehäuseschalen 3, 4 quasi Gehäusehälften des Sensorgehäuses 2.

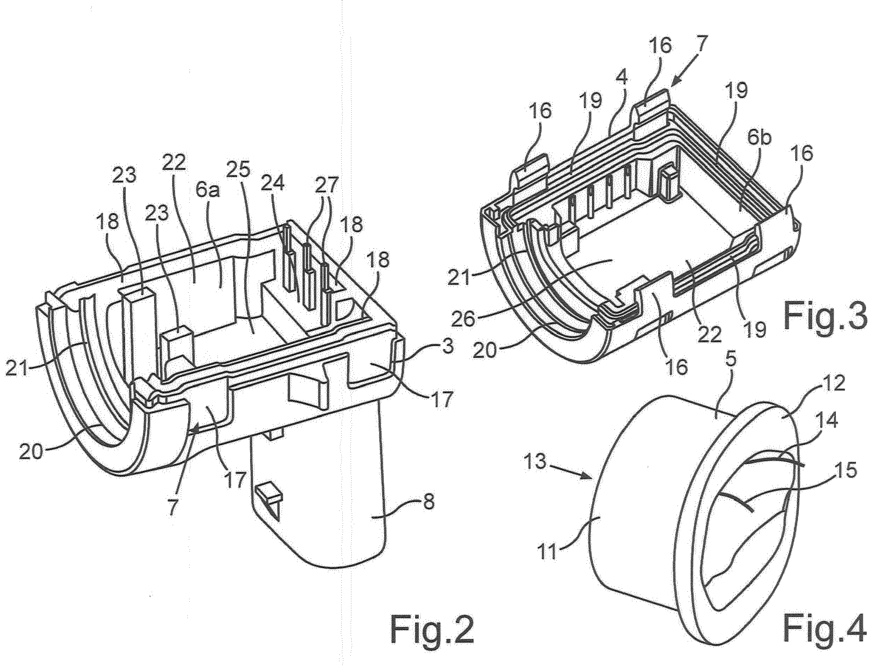

Wie aus Fig. 1 hervorgeht, hat die Membran 5 einen Schwingungsbereich 11, welcher aus dem Sensorgehäuse 2 herausragt. Bezug nehmend nun auf Fig. 4 ist die Membran 5 im Wesentlichen zylindrisch und topfartig ausgebildet und hat neben dem Schwingungsbereich 11 außerdem einen von dem Schwingungsbereich 11 radial nach außen hin abstehenden Flansch 12. Einerseits ist die Membran 5 axial stirnseitig offen ausgebildet; andererseits weist die Membran 5 einen scheibenförmigen Membranboden 13 auf (s. Fig. 1), welcher eine axiale Stirnseite der Membran 5 darstellt und sich im montierten Zustand des Ultraschallsensors 1 außerhalb des Sensorgehäuses 2 befindet. An der Innenseite des Membranbodens 13 ist ein Piezoelement angeordnet (in den Figuren nicht dargestellt), welches über elektrische Leitungen 14, 15 mit einer Leiterplatte verbunden wird. Über die Leitungen 14, 15 kann das Piezoelement mit elektrischer Spannung beaufschlagt und die Membran 5 somit zur mechanischen Schwingung angeregt werden. An den Leitungen 14, 15 kann auch die induzierte Spannung an dem Piezoelement abgegriffen werden.

Wie weiterhin aus Fig. 1 hervorgeht, ist die Membran 5 über den Flansch 12 zwischen die beiden Gehäuseschalen 3, 4, und genauer gesagt innerhalb des Entkopplungselements 6, geklemmt. Das Entkopplungselement 6 sorgt also neben der schwingungstechnischen Entkopplung auch für eine sichere Befestigung der Membran 5.

Die beiden Gehäuseschalen 3, 4 des Sensorgehäuses 2 sind in den Fig. 2 und 3 näher dargestellt. Das Entkopplungselement 6 wird auf eine innenseitige Fläche des Sensorgehäuses 2 bzw. der jeweiligen Gehäuseschalen 3, 4 aufgespritzt, sodass auch das Entkopplungselement 6 aus zwei Teilen 6a, 6b gebildet wird. Das eine Teil 6a des Entkopplungselements 6 ist somit einstückig mit der zugehörigen, ersten Gehäuseschale 3 ausgebildet bzw. an der innenseitigen Fläche dieser Gehäuseschale 3 gespritzt. Entsprechend ist auch das andere Teil 6b des Entkopplungselements 6 auf der innenseitigen Fläche der zugehörigen zweiten Gehäuseschale 4 gespritzt und somit einstückig mit dieser Gehäuseschale 4 bereitgestellt. Insgesamt erstreckt sich das Entkopplungselement 6 über den überwiegenden Längenbereich des Sensorgehäuses 2, und im Ausführungsbeispiel im Wesentlichen über die gesamte axiale Länge des Sensorgehäuses 2. Die Teile 6a, 6b sind also grundsätzlich zwei Hälften des Entkopplungselements 6.

Wie bereits ausgeführt, werden die beiden Gehäuseschalen 3, 4 über die Rastmittel 7 miteinander verbunden. Diese Rastmittel 7 weisen einerseits Rastelemente bzw. Rastnasen 16 - diese sind an der ersten Gehäuseschale 4 angeordnet - und andererseits korrespondierende Rastaussparungen 17 auf. Werden die beiden Gehäuseschalen 3, 4 gegeneinander gedrückt, so rasten die Rastnasen 16 in die korrespondierenden Rastaussparungen 17 ein, wodurch die beiden Gehäuseschalen 3, 4 miteinander verbunden werden. Das erste Teil 6a des Entkopplungselements 6 gelangt dann in Kontakt mit dem zweiten Teil 6b, wodurch das Sensorgehäuse 2 auch abgedichtet wird. Zu diesem Zwecke ist in dem ersten Teil 6a eine Nut bzw. Vertiefung 18 ausgebildet, in welche ein korrespondierender Dichtungsgrat 19 des zweiten Teils 6b aufgenommen wird.

Das Entkopplungselement 6 hat stirnseitig einen ersten Haltebereich 20, welcher zum Halten der Membran 5 ausgebildet ist. In diesem Haltebereich 20 ist eine umlaufende Nut 21 ausgebildet, in welche ein Randbereich des Flansches 12 der Membran 5 aufgenommen werden kann. Die Befestigung erfolgt derart, dass der Flansch 12 zunächst in die eine Hälfte der Nut 21 des ersten Teils 6a eingesetzt wird und anschließend dann die zweite Gehäuseschale 4 aufgesetzt wird, sodass der restliche Bereich des Flansches 12 in die andere Hälfte der Nut 21 des zweiten Teils 6b gelangt.

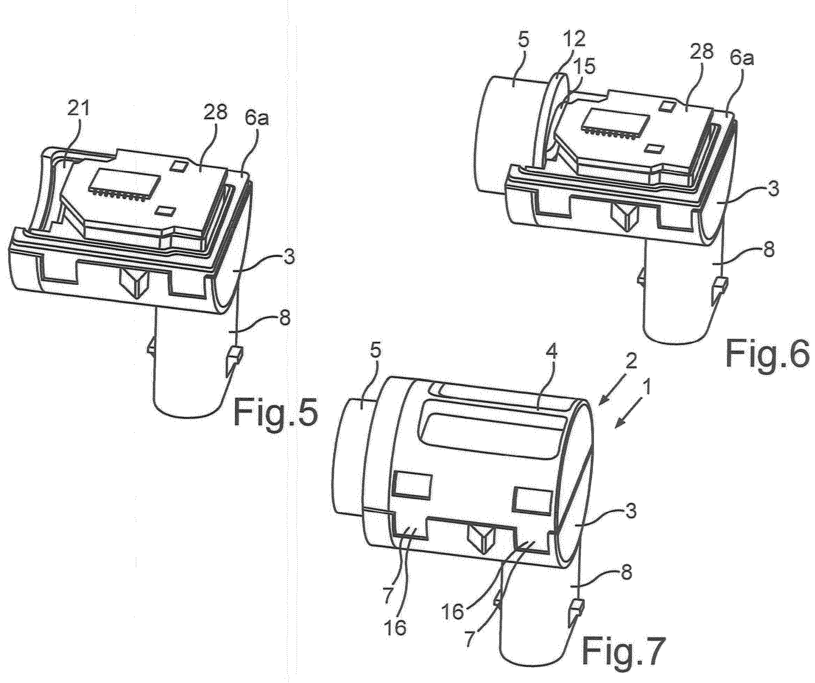

An den ersten Haltebereich 20 schließt sich in axialer Richtung ein zweiter Haltebereich 22 an, welche zum Halten einer Leiterplatte mit daran angeordneten elektronischen Bauelementen (s. beispielsweise Fig. 5) ausgebildet sind. In dem zweiten Haltebereich 22 sind an dem ersten Teil 6a Abstützelemente 23, 24 für die Leiterplatte ausgebildet, an welchen die Leiterplatte abgestützt werden kann. In eine Aufnahme 25 des ersten Teils 6a bzw. in die erste Gehäuseschale 3 kann ein Bauelement aufgenommen werden, welches an der Leiterplatte angeordnet ist. Selbiges gilt auch für eine Aufnahme 26, die in dem zweiten Teil 6b des Entkopplungselements 6 ausgebildet ist.

Wie aus Fig. 2 hervorgeht, stehen von dem Abstützelement 24, welches im axialen, hinteren Stirnbereich des ersten Teils 6a ausgebildet ist, eine Vielzahl von metallischen und somit elektrisch leitenden Anschlussbolzen 27 ab, über welche die Leiterplatte und die dort angeordneten Bauelemente mit dem Anschlussbereich 8 und hierdurch mit der elektronischen Steuereinrichtung elektrisch gekoppelt werden können.

Wie aus den Fig. 5 bis 7 hervorgeht, wird bei der Montage des Ultraschallsensors 1 die nunmehr mit 28 bezeichnete Leiterplatte in die erste Gehäuseschale 3 so eingesetzt, dass sich die Leiterplatte 28 in axialer Richtung erstreckt. Die Leiterplatte 28 wird dabei an den oben genannten Abstützelementen 23, 24 abgestützt. In einem nachfolgenden oder aber einem vorherigen Schritt wird die Membran 5 mit ihrem Flansch 12 in die erste Hälfte der Nut 21 des ersten Teils 6a aufgenommen und dort gehalten. Nun kann das Piezoelement über die Leitungen 14, 15 an die Leiterplatte 28 angeschlossen werden. Anschließend kann die zweite Gehäuseschale 4 mit der ersten Gehäuseschale 3 verbunden werden, sodass die Membran 5 zwischen die Gehäuseschalen 3, 4 geklemmt wird. Es ergibt sich insgesamt eine formschlüssige und kraftschlüssige Befestigung der Membran 5 in dem Entkopplungselement 6, welches die Membran 5 bzw. den Flansch 12 radial von außen umgibt und die Membran 5 somit schwingungstechnisch von dem Sensorgehäuse 2 entkoppelt. Der Ultraschallsensor 1 ist im montierten Zustand in Fig. 7 dargestellt.

## Patentansprüche

1. Verfahren zum Herstellen eines Ultraschallsensors (1) für ein Kraftfahrzeug durch Bereitstellen eines Sensorgehäuses (2), einer Membran (5) zum Aussenden und/oder Empfangen von Ultraschallsignalen und eines Entkopplungselements (6), welches zwischen dem Sensorgehäuse (2) und der Membran (5) angeordnet wird, wobei das Entkopplungselement (6) auf eine innenseitige Fläche des Sensorgehäuses (2) aufgespritzt wird und anschließend die Membran (5) in das Sensorgehäuse (2) eingesetzt wird
**dadurch gekennzeichnet, dass**
das Sensorgehäuse (2) aus zwei voneinander separaten Gehäuseschalen (3, 4) gebildet wird und das Entkopplungselement (6) aus zwei separaten Teilen (6a, 6b) gebildet wird, indem auf die jeweiligen innenseitigen Flächen der beiden Gehäuseschalen (3, 4) jeweils ein Teil (6a, 6b) des Entkopplungselements (6) aufgespritzt wird.

2. Verfahren nach Anspruch 1,
**dadurch gekennzeichnet, dass**
das Einsetzen der Membran (5) in das Sensorgehäuse (2) umfasst, dass die Membran (5) zunächst in die eine Gehäuseschale (3, 4) eingesetzt wird und anschließend die beiden Gehäuseschalen (3, 4) miteinander verbunden werden, so dass die Membran (5) zwischen den beiden Teilen (6a, 6b) des Entkopplungselements (6) eingeklemmt wird.

3. Verfahren nach Anspruch 1 oder 2,
**dadurch gekennzeichnet, dass**
die beiden Gehäuseschalen (3, 4) über Rastmittel (7) miteinander verbunden werden.

4. Verfahren nach einem der Ansprüche 1 bis 3,
**dadurch gekennzeichnet, dass**
durch die Verbindung der Gehäuseschalen (3, 4) die Membran (5) zwischen den beiderseitigen Teilen (6a, 6b) des Entkopplungselements (6) formschlüssig und/oder kraftschlüssig im Sensorgehäuse (2) festgelegt wird.

5. Verfahren nach einem der Ansprüche 1 bis4,
**dadurch gekennzeichnet, dass**
zumindest eines der Teile (6a, 6b) des Entkopplungselements (6) eine Dichtung (18, 19) zur Abdichtung einer Verbindungsstelle zwischen den beiden Gehäuseschalen (3, 4) aufweist.

6. Verfahren nach einem der vorhergehenden Ansprüche,
**dadurch gekennzeichnet, dass**
das Entkopplungselement (6) mit einem ersten Haltebereich (20) zum kraftschlüssigen und/oder formschlüssigen Halten der Membran (5) ausgebildet wird.

7. Verfahren nach Anspruch 6,
**dadurch gekennzeichnet, dass**
der erste Haltebereich (20) mit einer umlaufenden radialen Nut (21) ausgebildet wird, in welche ein radialer Randbereich (12) der Membran (5) zur Herstellung des Formschlusses und/oder des Kraftschlusses aufgenommen wird.

8. Verfahren nach einem der vorhergehenden Ansprüche,
**dadurch gekennzeichnet, dass**
das Entkopplungselement (6) mit einem zweiten Haltebereich (22) zum Halten einer Leiterplatte (28) ausgebildet wird.

9. Ultraschallsensor (1) für ein Kraftfahrzeug, mit einem Sensorgehäuse (2), mit einer Membran (5) zum Aussenden und/oder Empfangen von Ultraschallsignalen, und mit einem Entkopplungselement (6), welches zwischen dem Sensorgehäuse (2) und der Membran (5) angeordnet ist,
**dadurch gekennzeichnet, dass**
das Entkopplungselement (6) auf einer innenseitigen Fläche des Sensorgehäuses (2) angespritzt ist und das Sensorgehäuse (2) zwei voneinander separate Gehäuseschalen (3, 4) aufweist, zwischen welchen die Membran (5) eingeklemmt ist.

10. Kraftfahrzeug mit einem Ultraschallsensor (1) nach Anspruch 9.

## Claims

1. Method for producing an ultrasonic sensor (1) for a motor vehicle by providing a sensor housing (2), a membrane (5) for emitting and/or receiving ultrasonic signals, and a decoupling element (6), which is arranged between the sensor housing (2) and the membrane (5),
wherein the decoupling element (6) is injection-moulded onto an inner surface of the sensor housing (2) and the membrane (5) is subsequently inserted into the sensor housing (2),
**characterized in that**
the sensor housing (2) is formed by two housing shells (3, 4) that are separate from one another and the decoupling element (6) is formed by two separate parts (6a, 6b), **in that** a part (6a, 6b) of the decoupling element (6) is respectively injection-moulded onto the respective inner surfaces of the two housing shells (3, 4).

2. Method according to Claim 1,
**characterized in that**
the insertion of the membrane (5) into the sensor housing (2) comprises the membrane (5) first being inserted into the one housing shell (3, 4) and the two housing shells (3, 4) subsequently being connected to one another, and so the membrane (5) is clamped in place between the two parts (6a, 6b) of the decoupling element (6).

3. Method according to Claim 1 or 2,
**characterized in that**
the two housing shells (3, 4) are connected to one another by way of latching means (7).

4. Method according to one of Claims 1 to 3,
**characterized in that**
by the connection of the housing shells (3, 4), the membrane (5) is fixed in the sensor housing (2) with a form fit and/or force fit, between the parts (6a, 6b) on either side of the decoupling element (6).

5. Method according to one of Claims 1 to 4,
**characterized in that**
at least one of the parts (6a, 6b) of the decoupling element (6) has a seal (18, 19) for sealing a connecting location between the two housing shells (3, 4).

6. Method according to one of the preceding claims,
**characterized in that**
the decoupling element (6) is formed with a first holding region (20) for the force-fitting and/or form-fitting holding of the membrane (5).

7. Method according to Claim 6,
**characterized in that**
the first holding region (20) is formed with a peripheral radial groove (21), in which a radial edge region (12) of the membrane (5) is received to produce the form fit and/or the force fit.

8. Method according to one of the preceding claims,
**characterized in that**
the decoupling element (6) is formed with a second holding region (22) for holding a printed circuit board (28).

9. Ultrasonic sensor (1) for a motor vehicle, with a sensor housing (2), with a membrane (5) for emitting and/or receiving ultrasonic signals, and with a decoupling element (6), which is arranged between the sensor housing (2) and the membrane (5),
**characterized in that**
the decoupling element (6) is injection-moulded on an inner surface of the sensor housing (2) and the sensor housing (2) has two housing shells (3, 4) that are separate from one another, between which the membrane (5) is clamped in place.

10. Motor vehicle with an ultrasonic sensor (1) according to Claim 9.

## Revendications

1. Procédé de fabrication d'un capteur à ultrasons (1) pour un véhicule automobile consistant à fournir un boîtier de capteur (2), une membrane (5) destinée à émettre et/ou recevoir des signaux ultrasonores et un élément de découplage (6) qui est disposé entre le boîtier de capteur (2) et la membrane (5), dans lequel l'élément de découplage (6) est moulé par injection sur une surface intérieure du boîtier de capteur (2) et la membrane (5) est ensuite insérée dans le boîtier de capteur (2),
**caractérisé en ce que** le boîtier de capteur (2) est formé de deux coques de boîtier (3, 4) séparées l'une de l'autre et **en ce que** l'élément de découplage (6) est formé de deux parties séparées (6a, 6b) en moulant par injection la partie (6a, 6b) de l'élément de découplage (6) sur les surfaces intérieures respectives des deux coques de boîtier (3, 4).

2. Procédé selon la revendication 1, **caractérisé en ce que** l'insertion de la membrane (5) dans le boîtier de capteur (2) consiste à insérer tout d'abord la membrane (5) dans ladite coque de boîtier (3, 4) puis à relier les deux coques de boîtier (3, 4) l'une à l'autre de manière à ce que la membrane (5) soit serrée entre les deux parties (6a, 6b) de l'élément de découplage (6).

3. Procédé selon la revendication 1 ou 2,
**caractérisé en ce que** les deux coques de boîtier (3, 4) sont liées l'une à l'autre par des moyens d'encliquetage (7).

4. Procédé selon l'une quelconque des revendications 1 à 3,
**caractérisé en ce que** la membrane (5) est fixée dans le boîtier de capteur (2) entre les parties (6a, 6b) située des deux côtés de l'élément de découplage (6) en reliant entre elles les coques de boîtier (3, 4) par complémentarité de forme et/ou par complémentarité de force.

5. Procédé selon l'une quelconque des revendications 1 à 4,
**caractérisé en ce qu'**au moins l'une des parties (6a, 6b) de l'élément de découplage (6) comporte un élément d'étanchéité (18, 19) permettant de fermer hermétiquement un point de liaison entre les deux coques de boîtier (3, 4).

6. Procédé selon l'une quelconque des revendications 1 à 3,
**caractérisé en ce que** l'élément de découplage (6) est réalisé de manière à comporter une première zone de maintien (20) destinée à maintenir la membrane (5) par complémentarité de force et/ou par complémentarité de forme.

7. Procédé selon la revendication 6,
**caractérisé en ce que** la première zone de maintien (20) est réalisée de manière à comporter une rainure (21) circonférentielle radiale dans laquelle est reçue une zone périphérique radiale (12) de la membrane (5) pour réaliser le raccord par complémentarité de forme et/ou par complémentarité de force.

8. Procédé selon l'une quelconque des revendications précédentes,
**caractérisé en ce que** l'élément de découplage (6) est réalisé de manière à comporter une deuxième zone de maintien (22) destinée à maintenir une carte de circuit imprimé (28).

9. Capteur à ultrasons (1) pour un véhicule automobile, comportant un boîtier de capteur (2), une membrane (5) destinée à émettre et/ou recevoir des signaux ultrasonores et un élément de découplage (6) qui est disposé entre le boîtier de capteur (2) et la membrane (5),
**caractérisé en ce que** l'élément de découplage (6) est moulé par injection sur une surface intérieure du boîtier de capteur (2) et **en ce que** le boîtier de capteur (2) comporte deux coques de boîtier (3, 4) séparées l'une de l'autre, entre lesquelles est serrée la membrane (5).

10. Véhicule automobile comportant un capteur à ultrasons selon la revendication 9.
